# EUROPÄISCHE PATENTSCHRIFT

(11) **EP 3 541 745 B1**
(45) Veröffentlichungstag und Bekanntmachung des Hinweises auf die Patenterteilung: **22.12.2021**
(21) Anmeldenummer: 17805253.6
(22) Anmeldetag: 15.11.2017
(51) Int. Cl.: C01B 25/02, B01J 4/00, B01J 19/26, C22B 7/04, F27D 3/14

(54) **VERFAHREN UND VORRICHTUNG ZUR AUFARBEITUNG EINER EISENOXID UND PHOSPHOROXIDE ENTHALTENDEN SCHMELZE**
PROCESS AND APPARATUS FOR WORKUP OF A MELT CONTAINING IRON OXIDE AND PHOSPHORUS OXIDES
PROCÉDÉ ET DISPOSITIF POUR TRAITER UNE MASSE EN FUSION CONTENANT DE L'OXYDE DE FER ET DES OXYDES DE PHOSPHORE

(30) Priorität: 15.11.2016 AT 5222016
(43) Veröffentlichungstag der Anmeldung: 25.09.2019
(73) Patentinhaber: Radmat AG, 5442 Fislisbach (CH)
(72) Erfinder: EDLINGER, Alfred, 6781 Bartholomäberg (AT)
(74) Vertreter: Keschmann, Marc
(86) Internationale Anmeldenummer: PCT/IB2017/001378
(87) Internationale Veröffentlichungsnummer: WO 2018/091959

(56) Entgegenhaltungen:
- WO-A1-01/62987
- WO-A1-02/04154
- WO-A2-2012/065798
- DE-A1-102013 010 138
- US-A- 4 351 813

## Beschreibung

Die Erfindung betrifft ein Verfahren zum Aufarbeiten einer Eisenoxid und Phosphoroxide enthaltenden Schmelze zur Gewinnung von elementarem Phosphor durch carbothermische Direktreduktion der Phosphoroxide sowie eine Vorrichtung zur Durchführung eines solchen Verfahrens.

Die Aufarbeitung von organischen Abfallstoffen, wie z.B. von Klärschlamm, Trockenschlämmen, Klärschlammasche und Tiermehl, ist ein wichtiger Aspekt der Umwelttechnologie und gestaltet sich aufgrund der komplexen Zusammensetzung der betreffenden Abfallstoffe insbesondere dann besonders schwierig, wenn neben weitgehend unbedenklichen Naturstoffen auch Umweltgifte, wie beispielsweise Schwermetalle, Halogene, Pestizide, Herbizide, Antibiotika, kanzerogene und mutagene Schadstoffe, chlorierte Kohlenwasserstoffe, polychlorierte Biphenyle, Hormone und Endokrine in den Abfallstoffen enthalten sind. Wenn die Abfallstoffe Phosphoroxide enthalten, ist man im Rahmen der Aufarbeitung der Abfallstoffe bestrebt, Phosphor als elementaren Phosphor zurückzugewinnen.

Die Gewinnung von Phosphor wird jedoch dann erheblich erschwert, wenn Eisenoxide im Abfallstoff enthalten sind. Elementarer Phosphor löst sich bei hohen Temperaturen in Eisenschmelze zu Phosphoreisen (z.B. Fe₃P). Bei den bekannten Verfahren geht somit ein beträchtlicher Teil des Phosphors in die dort ebenfalls gebildete Eisenphase. Dieses Gleichgewicht verringert bzw. verhindert die Ausbeute von elementarem Phosphor.

Die Gewinnung von elementarem Phosphor durch carbothermische Direktreduktion der Phosphoroxide aus einer Eisenoxid und Phosphoroxide enthaltenden Schmelze ist in Matinde et al, "Phosphorus Gasification from Sewage Sludge during Carbothermic Reduction" ISIJ International, Vol. 48 (2008), No. 7, pp. 912-917 beschrieben, wobei auch hier eine deutlich niedrigere Phosphor-Ausbeute beobachtet wurde, wenn das Ausgangsmaterial einen höheren Eisenoxidgehalt aufweist.

Die Dokumente WO 2012/065798 A2, DE 10 2013 010138 A1, WO 01/62987 A1, WO 02/04154 A1 sowie US 4 351 813 A stellen den allgemeinen Stand der Technik auf dem Gebiet der vorliegenden Erfindung dar.

Die vorliegende Erfindung zielt daher darauf ab, ein Verfahren und eine Vorrichtung der eingangs genannten Art dahingehend zu verbessern, dass die Gewinnung von elementarem Phosphor aus Abfallstoffen in prozesstechnisch einfacher Art und Weise und mit hoher Phosphor-Ausbeute ermöglicht wird.

Zur Lösung dieser Aufgabe besteht die Erfindung bei einem Verfahren der eingangs genannten Art, d.h. bei der Gewinnung von Phosphor durch carbothermische Direktreduktion der Phosphoroxide aus einer Schmelze, im Wesentlichen darin, dass die Schmelze zerstäubt wird, die dadurch entstandenen Schmelzetröpfchen in Kontakt mit Kohlenmonoxid als Reduktionsmittel über eine Direktreduktionsstrecke geführt werden, in der die enthaltenen Phosphoroxide zumindest teilweise in gasförmigen elementaren Phosphor reduziert werden und von der die Schmelzetröpfchen gemeinsam mit dem gasförmigen elementaren Phosphor einem Separator zugeführt werden, mittels welchem der gasförmige elementare Phosphor von den Schmelzetröpfchen abgetrennt wird.

Durch das in der Schmelze enthaltene Phosphat sinkt deren Viskosität.

Erfindungsgemäß erfolgt die Phosphatreduktion daher mit Hilfe von Kohlenmonoxid als Reduktionsmittel, wobei Kohlenmonoxid bevorzugt mit einer Temperatur von 1.200 - 1.500°C eingesetzt wird. Die Direktreduktionsreaktion kann wie folgt beschrieben werden: P₂O₅ + 5CO -> 5 CO₂ + P₂. Im Gegensatz dazu erfolgt die Reduktion bei herkömmlichen Verfahren, wie z.B. im klassischen Wöhler-Niederschachtofen, über C, wobei gleichzeitig auch FexO metallisiert wird.

Dadurch, dass die oxidische Vor-Schmelze in Schmelzetröpfchen zerstäubt wird, wird die der stark reduzierenden Atmosphäre ausgesetzte Oberfläche der Schmelze wesentlich vergrößert. Die Zerstäubung zur Erzeugung von Schmelzetröpfchen erfolgt beispielsweise zu einer Tröpfchengröße von 50µm - 2mm. Bei Temperaturen der Schmelze von bevorzugt 1.200 bis 1.500°C sublimiert ein beträchtlicher Teil des enthaltenen P₂O₅ aus den Schmelzetröpfchen in die Gasphase und wird unmittelbar zu P₂ reduziert. Allgemein sublimiert reines P₂O₅ bereits bei 362°C. Parallel dazu erfolgt eine Aufkohlung des bereits metallisierten Eisens. Auf Grund der großen Oberfläche der Schmelze laufen die diffusionskontrollierten Sublimations-und Reduktionsvorgänge entsprechend rasch ab, wobei sich die Reaktionsoberfläche durch interne Diffusion ständig erneuert. Dieser Erneuerungsprozess wird durch eine möglichst niedrige Viskosität der Schmelze verbessert, wobei eine bevorzugte Verfahrensweise vorsieht, dass die Schmelze mit einer Schmelzeviskosität von 0,1 - 2,8 Pa·sec zerstäubt wird.

Es wurde weiters beobachtet, dass die Oberflächenspannung der Schmelzetröpfchen vergleichsweise gering ist und vorzugsweise bei ca. 0,5 N/m liegen kann, was naturgemäß die gewünschten Austauschreaktionen ebenfalls begünstigt. Die Oberflächenspannung der durch die Reduktion entstehenden Eisenträgertröpfchen ist hierbei wesentlich größer und liegt bevorzugt bei z.B. 2,0 N/m.

Die Zerstäubung der Schmelze erfolgt bevorzugt durch Beaufschlagung der Schmelze mit einem Gas. Die Zerstäubung wird gleichzeitig aber auch durch die schlagartige Volumenvergrößerung unterstützt, die bei den Sublimations-und Reduktionsvorgängen auf Grund der Gasphasenausbildung (P₂O₅, PO, PO₂, P₂/CO) auftritt.

Um eine Phosphierung des in der Schmelze enthaltenen Eisens zu verhindern, ist es entscheidend, die gebildete Gasphase (P_{2/}CO) so schnell wie möglich abzuziehen und damit dem entsprechenden Gleichgewicht zu entziehen. Erfindungsgemäß ist daher vorgesehen, dass die Schmelzetröpfchen gemeinsam mit dem gasförmigen elementaren Phosphor einem Separator zugeführt werden, mittels welchem der gasförmige elementare Phosphor von den Schmelzetröpfchen abgetrennt wird. Eine möglichst kurze Verweilzeit in der Direktreduktionsstrecke wird bevorzugt zudem dadurch erreicht, dass das Kohlenmonoxid mit hoher Geschwindigkeit (z.B. > 300 m/sec, bevorzugt 500 - 700 m/sec) in die Direktreduktionsstrecke eingestoßen wird. Dadurch werden die Schmelzetröpfchen mit hoher Turbulenz verwirbelt.

Eine besonders vorteilhafte Verfahrensweise besteht dabei darin, dass die Schmelze mit Hilfe des Reduktionsmittels als Zerstäubermedium zerstäubt wird. Dies kann beispielsweise so erfolgen, dass die Schmelze als Schmelzehohlzylinder aus einem Tundish ausgetragen wird und das Reduktionsmittel in das Innere des Schmelzehohlzylinders ausgestoßen wird, wobei das Reduktionsmittel vorzugsweise mit einer Geschwindigkeit von 500-700 m/s ausgestoßen wird. Dabei wird der Schmelzehohlzylinder durch die Wirkung des mit hoher Geschwindigkeit ausgestoßenen gasförmigen Reduktionsmittels in Tröpfchen, Filamente, Ligamente und Fäden desintegriert. Der im Tundish durch den Hochgeschwindigkeits-Gasstrahl erzeugte Unterdruck kann dabei durch Zufuhr von Rückgas (CO) oder O₂ oder durch eine weitere Vergasungsreaktion (C/O₂) gebrochen werden.

Ein weiterer Effekt, der die Phosphierung hintanhält, liegt darin, dass das Gasvolumen (CO/P₂) wesentlich grösser ist als das Volumen der gebildeten eisenhaltigen Tröpfchen, sodass die diffusionskontrollierte Phosphierung entsprechend der im Verhältnis sehr kleinen Eisenoberfläche sehr langsam verläuft und kinetisch stark gehemmt abläuft. Ein hoher CO-Partialdruck vermindert ebenfalls die Phosphierung, da P₂ im Gas verdünnt vorliegt und somit die P₂-Fugazität vermindert wird.

Der rasche Abzug der gebildeten Gasphase, einschließlich des gasförmigen elementaren Phosphors, geschieht über den oben erwähnten Separator. Dieser ist so aufgebaut, dass ein Mitreißen von Schmelzetröpfchen verhindert wird. Zu diesem Zweck wird bevorzugt so verfahren, dass die Schmelzetröpfchen und der gasförmige elementare Phosphor sowie das gebildete CO am Ende der Direktreduktionsstrecke in eine insbesondere induktiv beheizte Kohlenstoff-Schüttung geleitet werden, in der eine Tröpfchenagglomeration stattfindet und die abtropfende Schmelze gesammelt wird. Im Zuge der Tröpfchenagglomeration an der insbesondere induktiv beheizten Kohlenstoff-Schüttung kann eine Fertigreduktion der Schmelze stattfinden. Die Schmelze fließt anschließend bevorzugt in einen Vorherd, wo ggf. eine Separation einer Schlacke vom Roheisen erfolgt. Die Fertigreduktion kann auch durchgeführt werden in einem InduCarb-Reaktor, einem Eisenbad, einem Hochofen, einem Elektro-Niederschachtofen oder einem SLN-Drehrohrverfahren.

Die Schmelze kann beispielsweise mit einem Verfahren wie es in der WO 2016/145466 beschrieben ist verwertet werden. Eine derartige chemische Granulation der phosphatfreien Schmelze führt zu hochfesten/frühfesten Zementen.

Der gasförmige elementare Phosphor (gemeinsam mit CO) wird bevorzugt durch die insbesondere induktiv beheizte Kohlenstoff-Schüttung geleitet und über eine Mehrzahl von insbesondere schräg nach oben gerichteten Kanälen in ein in der Kohlenstoff-Schüttung angeordnetes Separatorrohr des Separators geführt. Der Abzug der Gasphase erfolgt dann über das Separatorrohr, das bevorzugt ebenfalls aus Kohlenstoff, insbesondere Graphit besteht und induktiv beheizt wird. Die abgezogene Gasphase kann beispielsweise über einen Regenerator-Wärmetauscher auf etwa 300° gekühlt und in herkömmlicher Art und Weise weiterbehandelt werden. Phosphor liegt beispielsweise im Separator als gasförmiges P₂ und nach der Gaskühlung als P₄ vor. Der kondensierte weiße Phosphor wird abgezogen und ein Teil des von P₄ befreiten CO kann beispielsweise als Rückgas für den Tundish eingesetzt werden.

Das bei der Reduktion des P₂O₅ gebildete CO₂ wird im Reaktor mittels C unmittelbar zu CO reduziert, entsprechend der Boudouard-Reaktion: CO₂ + C -> 2 CO. Das dabei gebildete CO steht wieder als Reduktionsmittel für die Reduzierung des Phosphoroxids zu elementarem Phosphor zur Verfügung. Eine bevorzugte Verfahrensführung sieht in diesem Zusammenhang vor, dass Kohlenmonoxid gemeinsam mit festem Kohlenstoff, insbesondere staubförmigem Kohlenstoff, eingebracht wird.

Bevorzugt ist hierbei vorgesehen, dass das Reduktionsmittel in einem Vergaser durch Teilverbrennung eines feinkörnigen Kohlenstoffträgers zu Kohlenmonoxid und festem Kohlenstoff hergestellt wird. Als Kohlenstoffträger wird Kokspulver, Aktivkohlepulver, Holzkohlenpulver und/oder Anthrazitstaub eingesetzt. Es kann auch reines CO/C erzeugt werden, z.B. durch rußende Teilverbrennung. Wichtig ist hierbei, dass der Kohlenstoffträger wasser- bzw. wasserstoff-frei ist, um eine ungewünschte Phosphin-Bildung zu vermeiden.

Da Phosphin bzw. Phosphan ein wertvoller Ausgangsstoff für die homogene Katayse, Halbleiter, Leuchtdioden, Halbleiterlaser, Transitoren (HEMTs) und phosphatanorganische Synthesen ist, kann die Phosphin- bzw. Phosphan-Bildung alternativ durchaus erwünscht sein. Hierbei wird jedoch bewusst feucht verbrannt, d.h. es gelangen Brennstoffe enthaltend H₂ bzw. H₂O zur Anwendung.

Reaktoren besitzen üblicherweise eine innere Feuerfestauskleidung. Im Zuge des erfindungsgemäßen Verfahrens ist die Anwendung von Al₂O₃-hältigem Feuerfestmaterial bevorzugt, da dieses durch die Reaktion mit der im Reaktor befindlichen calciumphosphathaltigen Schmelze zu einer hochfeuerfesten Verbindung ("Berlinit") reagiert, was wiederum eine Schutzschichtbildung an den Wänden des Reaktors bedingt. Dies führt zu einer signifikanten Standzeitverlängerung.

Die Direktreduktion von P₂O₅ zu P₂ mit Hilfe von CO ist eine endotherme Reduktionsreaktion, welche zu einer Temperaturabsenkung in der Direktreduktionsstrecke führt. In einer Sekundärreaktion reagiert das sich gebildete CO₂ mit dem ggf. eingeblasenen Kohlenstaub in der ebenfalls endothermen Boudouard-Reaktion zu CO. Dies führt zu einer weiteren Temperaturabsenkung. Um jedoch einen isothermen Betriebszustand aufrecht zu erhalten, ist bevorzugt vorgesehen, dass überschüssige Kohlenstoffpartikel exotherm vergast werden. Zu diesem Zweck kann vorgesehen sein, dass in die Direktreduktionsstrecke Sauerstoff oder ein sauerstoffhaltiges Gas eingedüst wird, um eine Vergasung des bevorzugt mit dem Reduktionsmittel eingebrachten festen Kohlenstoffs zu Kohlenmonoxid zu bewirken. Dabei entstehen sehr heiße oxidierende Verbrennungszonen (CO₂-reich) von über 2.000°C, welche zur Thermodissoziation und Sublimation von P₂O₅, PO, PO₂ führt.

Die Eindüsung von Sauerstoff kann gleichzeitig zur Ausbildung turbulenter Strömungsverhältnisse, insbesondere einer Wirbelströmung, in wenigstens einem Teilbereich der Direktreduktionsstrecke genützt werden. Die Erzeugung turbulenter Strömungsverhältnisse in der Direktreduktionsstrecke ist vorteilhaft, um Diffusionsprozesse in der Gasphase zu maximieren weil die Gasviskosität durch Temperaturerhöhung stark ansteigt. Wenn die Schmelzezerstäubung mit Hilfe von in das Innere eines Schmelzehohlzylinders ausgestoßenem Kohlenmonoxid erfolgt, gelingt eine weitere Desintegration des Schmelzehohlzylinders dadurch, dass der Sauerstoff z.B. über eine Vielzahl von Lochdüsen ausgestoßen wird, wobei die Lochdüsen vorzugsweise entlang eines den sich zerteilenden Hohlzylinder umgebenden Ringes angeordnet sind.

Insbesondere dann, wenn die eingebrachte Schmelze einen hohen P₂O₅-Gehalt von z.B. grösser als 8 Gew.-% aufweist, kann bevorzugt so vorgegangen werden, dass die Eindüsung von Sauerstoff oder eines sauerstoffhaltiges Gases an wenigstens zwei, insbesondere mehreren, in Strömungsrichtung aufeinanderfolgenden Stellen der Direktreduktionsstrecke erfolgt, um den überschüssigen C-Staub teilweise fraktioniert zu vergasen. Weiters kann vorgesehen sein, dass fester Kohlenstoff, insbesondere staubförmiger Kohlenstoff, an wenigstens zwei, insbesondere mehreren, in Strömungsrichtung aufeinanderfolgenden Stellen in die Direktreduktionsstrecke eingebracht wird. Durch eine derartige kaskadenartige Anordnung der Sauerstoff- und ggf. Kohlenstoffaufgabe entlang der Direktreduktionsstrecke gelingt eine stufenweise Reduktion.

Eine bevorzugte Verfahrensweise sieht vor, dass der am Ende der Direktreduktionsstrecke herrschende CO₂-Partialdruck gemessen wird. Dieser Messwert gibt den Kohlenstoffumsatzgrad an und kann herangezogen werden, um die Menge des eingebrachten festen Kohlenstoffs zu regeln. Insbesondere kann die Regelung dahingehend erfolgen, dass nur geringe oder keine C-Partikel in den Bereich des Separators, insbesondere in die Kohlenstoff-Schüttung eingeschleppt werden, um hier Verstopfungen zu vermeiden. Die Fertigreduktion, allenfalls auch die Eisenmetallisierung, wird dann in der Kohlenstoff-Schüttung durchgeführt werden.

Die im Rahmen des erfindungsgemäßen Verfahrens aufzuarbeitenden Schmelzen können entweder als Abfallprodukt eines Prozesses, wie z.B. eines metallurgischen Prozesses, unmittelbar in Form einer Schmelze anfallen oder entstehen durch Schmelzen von in fester Form anfallenden Abfallstoffen.

Die aufzuarbeitenden Schmelzen umfassen bevorzugt eine homogene, molekulardisperse Mischung aus CaO, MgO, SiO₂, Al₂O₃, FexO und P₂O₅. Der Schmelzbereich liegt abhängig von der Zusammensetzung vorzugsweise zwischen 1.180 und 1.480°C. Dabei wirkt insbesondere der Gehalt von FexO stark verflüssigend und setzt den Schmelztemperaturbereich herab. In geringerem Maß gilt das auch für MgO.

Bevorzugt ist hierbei vorgesehen, dass die Schmelze bei einer Schmelzetemperatur von 1.200 - 1.500°C zerstäubt wird.

Bevorzugt wird als Schmelze Minette-Erz-Schmelze, phosphathältige Stahlwerksschlacken (insbesonder aus dem LD-Konverter oder dem E-Ofen), Apatit-Schmelze, geschmolzene Klärschlammasche, aufgeschmolzenes Tier-und/oder Knochenmehl, Wavellit-Schmelze, Vivianit-Schmelze oder Mischungen hiervon eingesetzt.

Bevorzugt beträgt das CaO/SiO₂ - Verhältnis der Schmelze 0,8 - 1,4, vorzugsweise 0,8 - 1,2.

Die im Rahmen des erfindungsgemäßen Verfahrens aufzuarbeitende Schmelze kann aus reduktionstechnischen Gründen oder aus Gründen der Schmelzeverflüssigung bevorzugt von einer mineralischen Vorschmelze ausgehen, deren CaO/SiO₂ - Verhältnis mittels Silikat- und/oder Kalkträger auf einen Wert von 0,8 - 1,2 eingestellt wird. Derartige Vorschmelzen können beispielsweise erzeugt werden in einem FlashReaktor, einem Schmelzzyklon, einem Drehrohrofen oder einem gasbefeuerten kokslosen Schachtofen. Bevorzugt wird die Vorschmelze unter oxidierenden Bedingungen gewonnen. Diverse Verunreinigungen wie z.B. Hg, Cd, Zn, Pb, Cu, Alkalien und Halogene werden dabei verflüchtigt und in einer separaten Gasaufbereitung behandelt. Als Kalkträger zur Einstellung eines CaO/SiO₂ - Verhältnisses von 0,8 - 1,2 können bevorzugt Kalkstein, Branntkalk, Kalkmergel, CaCl₂ (z.B. als Nebenprodukt des Solvay-Verfahrens), Zementklinkerofen-Bypass-Staub, Stahlwerksschlacke und/oder Feuerfest-Ausbruchsmaterial zum Einsatz gelangen. Als Silikatträger zur Einstellung eines CaO/SiO₂ - Verhältnisses von 0,8 - 1,2 können bevorzugt Quarzstaub, Schleifstäube aus der Glasindustrie, Altglas und/oder Gießerei-Altsand verwendet werden.

Bevorzugt ist hierbei vorgesehen, dass die Schmelze mit einer Schmelzeviskosität von 0,1 - 2,8 Pa·sec zerstäubt wird.

Zur Lösung der der Erfindung zugrunde liegenden Aufgabe ist gemäß einem weiteren Aspekt eine Vorrichtung zur Durchführung des erfindungsgemäßen Verfahrens vorgesehen, umfassend einen Tundish mit einem in einen Direktreduktionsreaktor führenden Auslauf und eine Ausstoßvorrichtung zum Ausstoßen von Kohlenmonoxid und ggf. C-Staub in den Bereich des Auslaufs zum Zerstäuben der auslaufenden Schmelze in Schmelzetröpfchen, wobei an den Direktreduktionsreaktor ein Separator anschließt, der zur Abtrennung von im Direktreduktionsreaktor gebildetem, gasförmigen, elementaren Phosphor und CO von den Schmelzetröpfchen ausgebildet ist.

Es ist vorgesehen, dass der Separator eine insbesondere induktiv beheizbare Kohlenstoff-Schüttung umfasst, in der eine Tröpfchenagglomeration stattfindet. Die Kohlenstoff-Schüttung besteht aus grobstückigem Kohlenstoff, insbesondere Graphit oder Hüttenkoks.

Bevorzugt ist weiters vorgesehen, dass der Separator ein Separatorrohr umfasst, das in der Kohlenstoff-Schüttung angeordnet ist und das eine Mehrzahl von insbesondere schräg nach oben gerichteten Kanälen aufweist, über welche der gasförmige Phosphor von der Kohlenstoff-Schüttung in das Innere des Separatorrohrs führbar ist.

Das Separatorrohr besteht vorzugsweise aus Kohlenstoff, insbesondere Graphit und kann induktiv beheizbar sein. Die Oberfläche des Separatorrohres ist aus Abrasionsgründen siliziert (harte Silizium-Carbid-Oberfläche).

Bevorzugt ist vorgesehen, dass wenigstens eine Düse zum Einstoßen von Sauerstoff oder eines sauerstoffhaltigen Gases in die Direktreaktionskammer vorgesehen ist. Die ringförmige Düse kann hierbei koaxial zur Achse des Tundishauslaufes in der Direktreduktionskammer angeordnet sein.

Bevorzugt ist vorgesehen, dass Düsen zum Einstoßen von Sauerstoff oder eines sauerstoffhaltigen Gases in die Direktreaktionskammer an wenigstens zwei, insbesondere mehreren, in Strömungsrichtung aufeinanderfolgenden Stellen angeordnet sind bzw. in die Direktreduktionskammer münden.

Weiters können Düsen zum Einstoßen von festem Kohlenstoff, insbesondere staubförmigem Kohlenstoff, an wenigstens zwei, insbesondere mehreren, in Strömungsrichtung aufeinanderfolgenden Stellen der Direktreduktionskammer vorgesehen sein.

Eine kaskadenförmige Anordnung ist nicht nur in Bezug auf die Düsen zum Einstoßen von Sauerstoff und in Bezug auf die Düsen zum Einstoßen von festem Kohlenstoff möglich, sondern auch in Bezug auf den Separator. Es können wenigstens zwei, insbesondere mehrere Separatoren an oder in der Direktreduktionskammer vorgesehen sein, um fraktioniert P₂/CO abzuziehen und damit das Gleichgewicht in die gewünschte Richtung zu bringen.

Bevorzugt ist weiters ein Vergaser vorgesehen, dem ein feinkörniger Kohlenstoffträger, ausgewählt aus der Gruppe bestehend aus Kokspulver, Aktivkohlepulver, Holzkohlenpulver und Anthrazitstaub sowie Sauerstoff zuführbar ist und der eine insbesondere düsenförmige Ausstoßöffnung aufweist, welche die Ausstoßvorrichtung zum Ausstoßen des im Vergaser gebildeten Kohlenmonoxids in den Bereich des Tundishauslaufs ausbildet.

Bevorzugt ist vorgesehen, dass im Tundish ein insbesondere höhenverstellbares Wehrrohr angeordnet ist, dessen Unterkante einen ringspaltförmigen Auslaufquerschnitt begrenzt. Im Wehrrohr kann hierbei eine insbesondere höhenverstellbare Lanze zum Einstoßen von Kohlenmonoxid in den Direktreduktionsreaktor angeordnet sein.

Über die außen vom Wehrrohr und innen von der Lanze begrenzte Ringkammer können bevorzugt Kohlenstoffpartikel und ggf. Sauerstoff eingesaugt und so in den Reaktor 7 eingebracht werden.

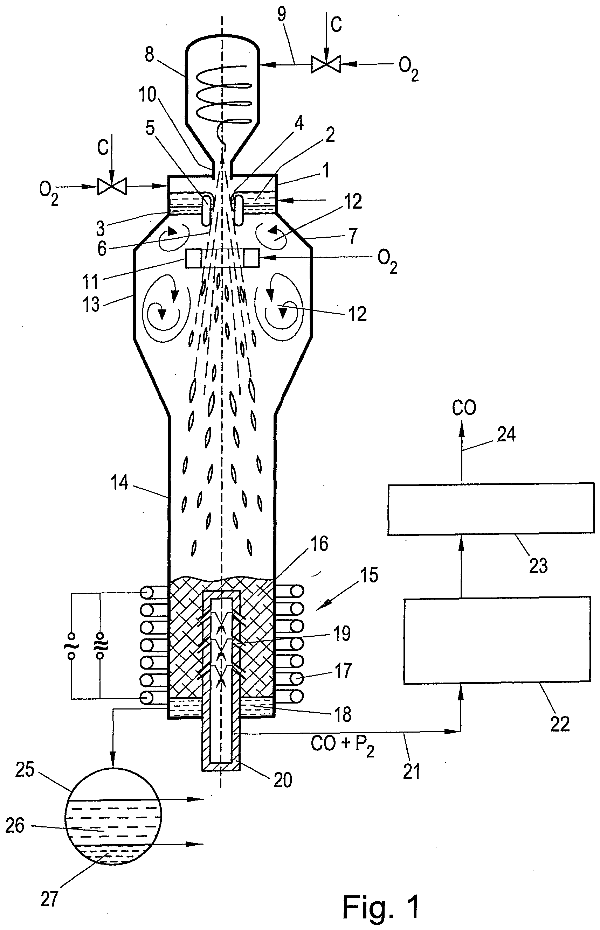

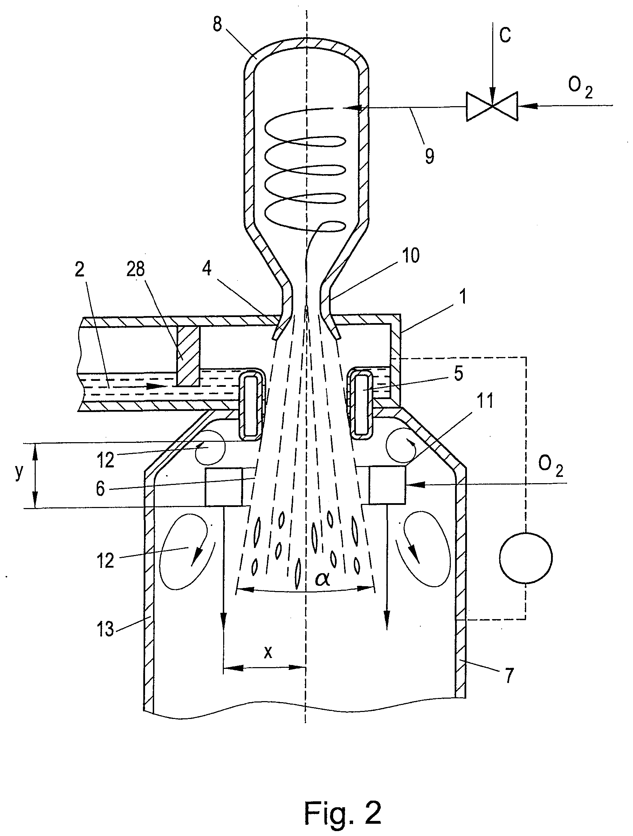

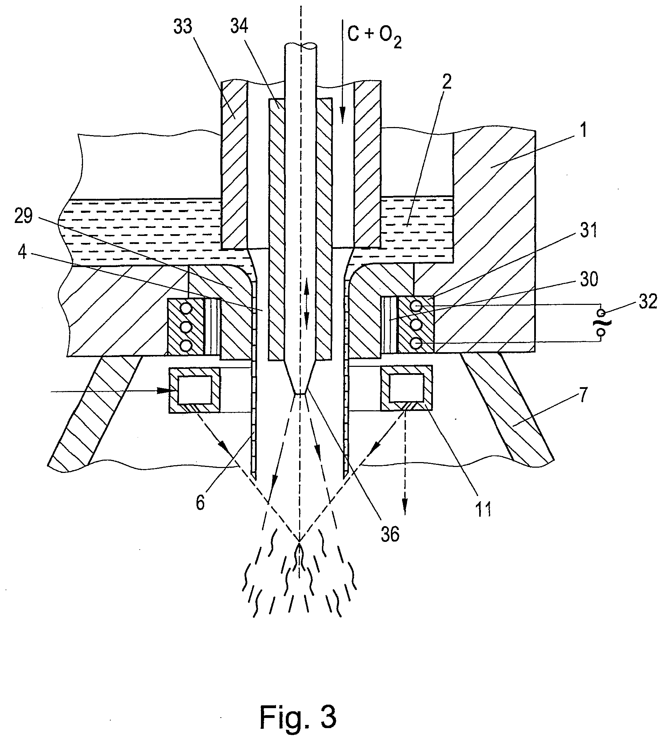

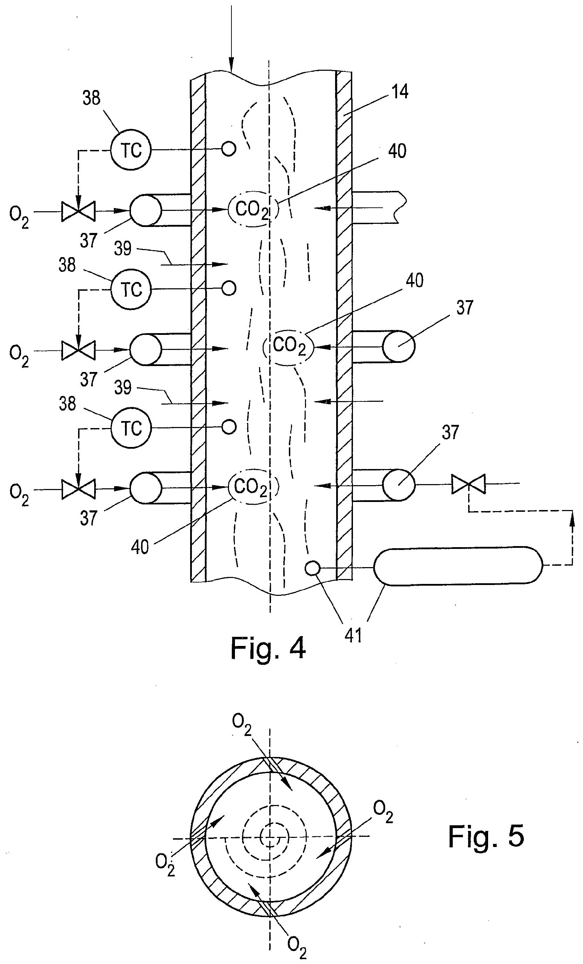

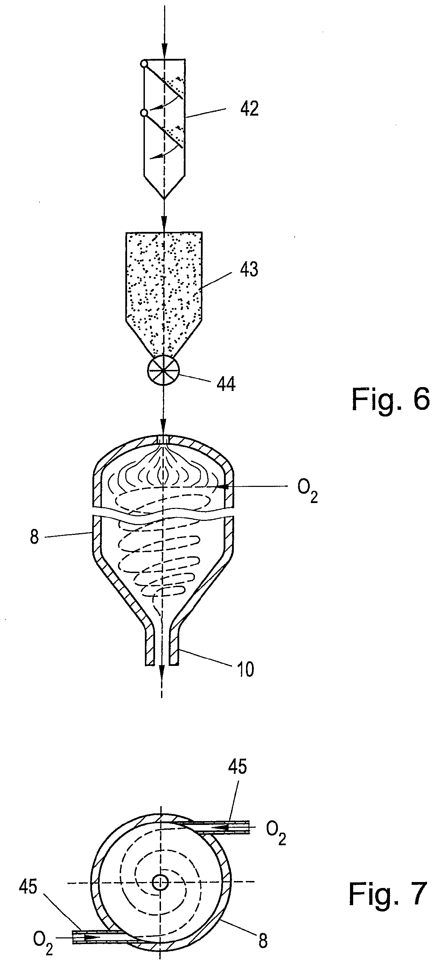

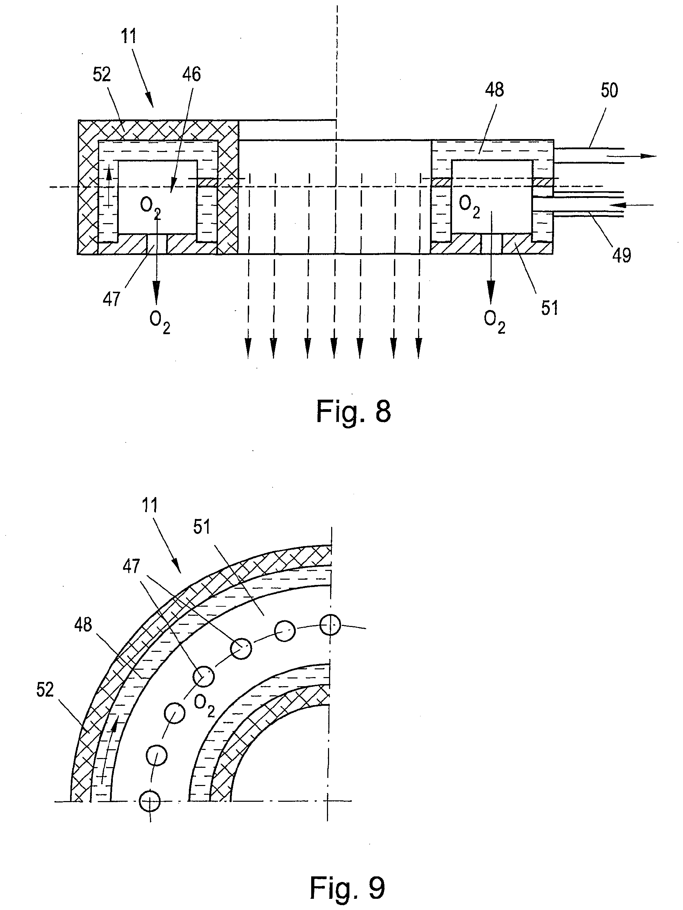

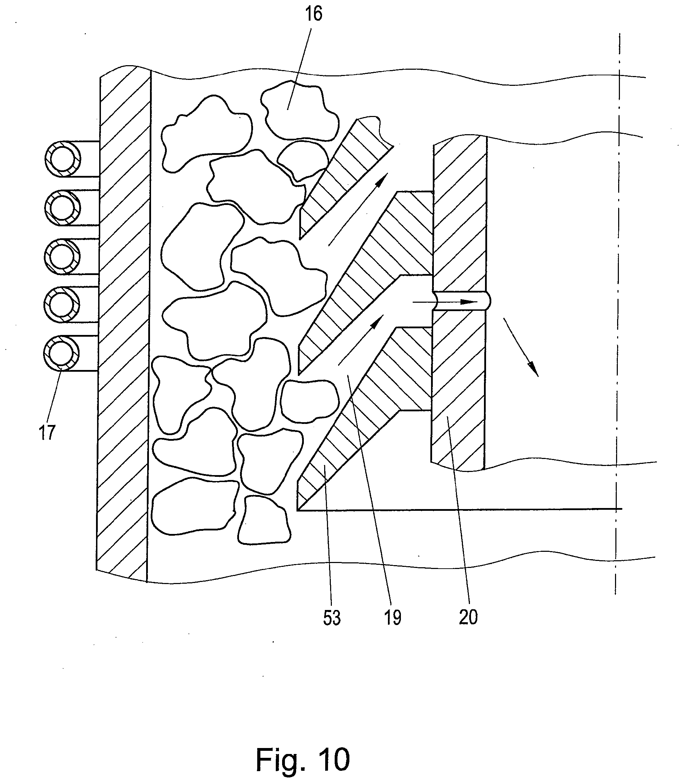

Die Erfindung wird nachfolgend anhand von in der Zeichnung schematisch dargestellten Ausführungsbeispielen näher erläutert. In dieser zeigen Fig. 1 eine schematische Darstellung einer Vorrichtung zur Durchführung des erfindungsgemäßen Verfahrens, Fig. 2 eine Detailansicht der Schmelzezerstäubung gemäß Fig. 1, Fig. 3 eine Detailansicht einer Schmelzezerstäubung in einer abgewandelten Ausführungsform, Fig. 4 eine alternative Ausbildung der Direktreduktionsstrecke der Vorrichtung, Fig. 5 einen Querschnitt des Reaktors gemäß Fig. 4 im Bereich der Sauerstoffeinbringung, Fig. 6 eine schematische Darstellung einer Vergaser-Brennkammer zur Verwendung in einer Vorrichtung gemäß Fig. 1, Fig. 7 eine Horizontalschnitt der Vorrichtung gemäß Fig. 6, Fig. 8 eine Detailansicht einer Ringdüse zum Einstoßen von Sauerstoff im Schnitt, Fig. 9 eine Teilansicht der Ringdüse gemäß Fig. 8 im Horizontalschnitt und Fig. 10 eine vergrößerte Teilansicht des Separators.

In Fig. 1 ist ein Tundish mit 1 bezeichnet, in dem die aufzuarbeitende Schmelze 2 mit einer Temperatur von z.B. 1.200-1.500°C vorliegt. Die Schmelze besteht vorzugsweise aus einer homogenen, molekulardispersen Mischung aus CaO, MgO, SiO₂, Al₂O₃, FexO und P₂O₅. Der FexO-Anteil bewirkt hohe Feuerfestkorrosionsraten, sodass die aufzuarbeitende Schmelze 2 auf einem Sn/Ni/Cu-Bad 3 liegt, um die Feuerfestauskleidung des Tundish 1 zu schützen. Das Metallbad sorgt außerdem für die nötige gleichmäßige Wärmeverteilung, da die mineralische Schmelze im Gegensatz zur metallischen Schmelze eine geringe Leitfähigkeit aufweist. Dies würde im Zerstäuberkopf zum Einfrieren der Schmelze führen. Die Auslauföffnung des Tundish 1 ist mit 4 bezeichnet und kann von einem Lochstein mit einer Ringkammer 5 gebildet sein, durch welche Kühlmedium zur Kühlung des Lochsteins geleitet wird. Die Schmelze 1 läuft in Form eines Hohlzylinders 6 aus dem Tundish 1 in den Reaktor 7 aus.

In einem oberhalb des Tundish 1 angeordneten Druck-Vergaser 8 wird ein über die Leitung 9 tangential zugeführter fester, feinkörniger Kohlenstoffträger mit Hilfe von Sauerstoff vergast, um gasförmiges CO und festes C zu erzeugen. Der Vergaser 8 wird vorzugsweise bei einer Temperatur von 1.200-1.500°C und einem Druck von 2-5 bar betrieben. Auf Grund der tangentialen Einbringung des Kohlenstoffträgers entsteht im Inneren des Vergasers 8 eine zyklonartige Strömung, mit welcher das Vergasungsprodukt in Richtung zur Austragsdüse 10 transportiert wird. CO und C wird aus dem Vergaser 8 über die Austragsdüse 10 auf Grund des Druckgradienten mit einer Geschwindigkeit von vorzugsweise 300-700m/sec ausgestoßen, wobei die Austragsdüse 10 koaxial zur Auslauföffnung 4 des Tundish 1 angeordnet ist. Wie deutlich in Fig. 2 ersichtlich ist, werden CO und C als Reduktionsmittel in den Reaktor 7 ausgestoßen, wobei das Reduktionsmittel gleichzeitig als Zerstäubungsmedium zum Zerstäuben des Schmelzehohlzylinders 6 zu kleinen Schmelzetröpfchen eingesetzt wird. Zu diesem Zweck wird das Reduktionsmittel aus der Austragsdüse 10 in das Innere des Schmelzehohlzylinders 6 ausgestoßen, wo es den Schmelzehohlzylinder 6 in Tröpfchen, Filamente, Ligamente und Fäden desintegriert.

Im Bereich der Schmelzezerstäubung ist im Inneren des Reaktors 7 ein ringförmiger Kanal 11 zur Einbringung von Sauerstoff angeordnet, der eine Vielzahl von nach unten gerichteten und/oder nach innen konvergierenden Lochdüsen aufweist, aus welchen der Sauerstoff auf die sich dispergierende Schmelze gerichtet ausgestoßen wird. Es ergibt sich dadurch, wie durch die Pfeile 12 angedeutet, ein turbulente Strömung in dem im Durchmesser erweiterten Abschnitt 13 ("Vortex-Kammer") des Reaktors 7 und die Partikel werden weiter desintegriert.

Im Abschnitt 13 des Reaktors 7 gelangen die Schmelzetröpfchen in Kontakt mit dem Kohlenmonoxid aus dem Vergaser 8, wodurch die in der Schmelze enthaltenen Phosphoroxide zumindest teilweise in gasförmigen elementaren Phosphor reduziert werden. Durch die Entstehung von gasförmigem Phosphor erfolgt eine Volumenzunahme im Abschnitt 13 des Reaktors 7, sodass dieser Abschnitt, im Vergleich zum nachfolgenden Abschnitt 14 mit größerem Durchmesser ausgebildet ist.

Das bei der Reduktion des P₂O₅ gebildete CO₂ wird mittels der aus dem Vergaser 8 zugeführten festen Kohlenstoffpartikel entsprechend der Boudouard-Reaktion zu CO reduziert. Das dabei gebildete CO steht wieder als Reduktionsmittel für die Reduzierung des Phosphoroxids zu elementarem Phosphor zur Verfügung.

Der Abschnitt 13 und der Abschnitt 14 des Reaktors 7 bilden gemeinsam die Direktreduktionsstrecke, in der die oben beschriebene Reduktionsreaktionen stattfinden. Die Eindüsung von Sauerstoff erfolgt, um entlang der Direktreduktionsstrecke einen isothermen Betriebszustand aufrecht zu erhalten. Mit dem eingedüsten Sauerstoff werden Kohlenstoffpartikel exotherm zu Kohlenmonoxid vergast. Als Nebenreaktion erfolgt: C/CO + O₂ -> CO₂ (ca. 2.200°C), was eine Thermodissoziation von P₂O₅ und anschließen sofort eine Rückreaktion und eine Abkühlung: CO₂ + C -> 2CO.

Am Ende der Direktreduktionsstrecke werden die Schmelzetröpfchen gemeinsam mit der Gasphase, welche den gasförmigen elementaren Phosphor sowie CO und ggf. CO₂ umfasst, einem Separator 15 zugeführt, mittels welchem die Gasphase von den Schmelzetröpfchen abgetrennt wird. Als Gehäuse des Separators 15 kann das verlängerte Gehäuse des Reaktors 7 verwendet werden, sodass eine unmittelbar an die Direktreduktionsstrecke anschließende Anordnung des Separators 15 erreicht wird. Der Separator umfasst einen Kohlenstoff-Suszeptor 16 aus grobstückigem Kohlenstoff, wie z.B. Graphit. Die von Wechselstrom durchflossene Spule der Induktionsheizung ist mit 17 bezeichnet und ist das Gehäuse umgebend angeordnet.

Die in den Kohlenstoff-Suszeptor 16 bzw. die induktiv beheizte Kohlenstoff-Schüttung geleiteten Schmelzetröpfchen werden dort einer Tröpfchenagglomeration unterworfen, wobei die abtropfende Schmelze in einem darunter angeordneten Sammelgefäß 18 gesammelt wird. In der Kohlenstoff-Schüttung 16 können auch noch Restreduktionsprozesse durchgeführt werden. Die Gasphase tritt durch die Kohlenstoff-Schüttung 16 hindurch und wird über eine Mehrzahl von insbesondere schräg nach oben gerichteten Kanälen 19, die in einem in der Kohlenstoff-Schüttung 16 angeordneten Separatorrohr 20 des Separators ausgebildet sind, in das Separatorrohr 20 geführt. Das Separatorrohr kann z.B. als oberflächlich silizierter Graphit-Hohlzylinder ausgebildet sein. Von dort gelangt die Gasphase, die hier eine Temperatur von ca. 1.200-1.500°C aufweist, über eine Leitung 21 in einen Regenerator-Wärmetauscher 22, mit welchem die Gasphase auf z.B. 300°C abgekühlt wird. Nach der Gaskühlung liegt das Phosphor als P₄ vor und kann als P₄-Kondensat bei 23 abgezogen werden. Ein Teil des von P₄ befreiten CO kann über die Leitung 24 abgezogen werden und beispielsweise als Rückgas für den Tundish 1 eingesetzt werden. Mögliche Schadstoffe, Alkalien, Halogene und Schwermetalle kondensieren bei über 300°C und können dort mittels fraktionierter Kondensation abgezogen werden, sodass reines P₄ gewonnen wird.

Der verbrauchte Anteil der Kohlenstoff-Schüttung 16 kann hierbei ersetzt werden, in dem das Material der Kohlenstoff-Schüttung über eine im Abschnitt 14 angeordnete Schleuse (nicht dargestellt) in den Reaktor zugegeben wird.

Die im Sammelgefäß 18 gesammelte Schmelze wird in einen Vorherd 25 verbracht, aus dem Schlacke 26 und Roheisen 27 gesondert abgestochen werden können.

Die induktive Beheizung der Kohlenstoff-Schüttung 16 erfolgt bevorzugt nach einem Doppelfrequenzverfahren. Die grobstückige Schüttung 16 koppelt bei einer induktiv aufgebrachten Wechselstromspannung zwischen 80-160 kHz gut an, ist aber für Frequenzen zwischen 2-15 kHz transparent. Bei diesen Frequenzen kuppelt dann optimal das Separatorrohr 20 an. Somit kann der bekannte Skin-Effekt egalisiert werden und man kann das Temperaturfeld leistungsabhängig über den Querschnitt der Kohlenstoff-Schüttung 16 verschieben. Der Betrieb kann sowohl kontinuierlich oder getaktet/intermittierend erfolgen. Die Schmelzetröpfchen aus dem Reaktor 7 koagulieren in der Kohlenstoff-Schüttung 16 zu einem kontinuierlichen Schlackenfluss, dessen Temperatur leistungsabhängig eingestellt werden kann. Es kann vorteilhaft sein, die Schmelze in der Kohlenstoff-Schüttung 16 erstarren zu lassen - dabei entsteht ein absolut tröpfchenfreies Produktgas, welches radial abgezogen wird. Bei einem definierten Druckverlust zwischen der Kohlenstoff-Schüttung 16 und Produktgasabzug kann über eine Temperaturerhöhung die Schmelze wieder abgezogen und die Kohlenstoff-Schüttung 16 so regeneriert werden.

Natürlich ist es auch denkbar, derartige (auch kleinere) Separatoreinheiten auch bereits direkt in oder entlang der Direktreduktionsstrecke des Reaktors 7 anzuordnen, um hier bereits Produktgas-Teilabzüge zu realisieren. Dabei verschiebt sich das Gleichgewicht der Phosphat-Reduktion in die gewünschte Richtung. Beispielsweise sind die genannten Separatoreinheiten radial am Reaktorrohr angeflanscht.

In der vergrößerten Darstellung gemäß Fig. 2 ist die Zerstäubung des aus dem Tundish 1 auslaufenden Schmelzehohlzylinders 6 dargestellt, wobei die Ausbildung im Wesentlichen der bereits in Fig. 1 gezeigten Ausbildung entspricht. Abweichend von Fig. 1 ist im Tundish 1 jedoch ein Tauchwehr 28 angeordnet, welches den Auslaufbereich des Tundish 1 vom Schmelzezuführbereich trennt.

Weiters können anhand der Fig. 2 die bevorzugten Düsenparameter zur Zerstäubung der Schmelze erläutert werden. Die Schlackenfluss-Überhöhung gegenüber dem Lochstein des Tundish 1 kann bevorzugt zwischen 2 und 7 mm betragen. Die vertikale Distanz zwischen der Schmelzeabrisskante und der Ringdüse 11 ist mit y bezeichnet und ist stark abhängig von der Schmelzeviskosität: bei hoher Viskosität ist es bevorzugt y mit 0 mm oder leicht negativ zu wählen. Bei geringer Viskosität kann der Abstand y z.B. ca. 70 mm gewählt sein. Ein anderer Einflussfaktor in Bezug auf die Zerstäubung ist das sog. "prefilming", d.h. die Ausbildung einer möglichst großen Schmelzefilmoberfläche durch Schwerkraft.

Der horizontale Abstand zwischen dem aus der Ringdüse 11 austretenden Sekundärdüsenstrahl und der Achse der Auslauföffnung 4 hat einen vergleichsweise geringen Einfluss auf die Zerstäubung. Die hohe Geschwindigkeit des aus der Ringdüse austretenden Sauerstoffs erzeugt entsprechend der Bernoulli-Gleichung einen Unterdruck, welcher die Schmelzepartikel in den Sekundärgasstrom (Sauerstoffstrom) hineinbeschleunigt und dort weiter desintegriert.

Der Winkel α (Primärstrahl) kann bevorzugt so gewählt werden, dass dieser abhängig vom Düsenvordruck zwischen 15° und 35° liegt. Hinsichtlich des Sekundärstrahlwinkels (Winkel des aus der Ringdüse 11 austretenden Strahls) wurden gute Ergebnisse mit 0° (also vertikal) erzielt. Es wird vermutet, dass Winkel von bis zu +/- 15° ebenfalls gute Ergebnisse erzielen lassen. Es ist auch denkbar die einzelnen Sekundärstrahl-Lochdüsen abwechselnd in +/-Winkel-Ausrichtung anzuordnen. Damit scheint das beste Desintegrationsergebnis möglich.

Weiters wurde beobachtet, dass der über die Ringdüse 11 austretende Sekundärdüsen-Sauerstoff in vorteilhafter Weise die Kühlung (Schlackenpelzbildung) im Lochstein bewerkstelligen kann. Der Sekundärsauerstoff wird dabei isobar erwärmt, was aufgrund des erhöhten O₂-Volumenstroms zu einem besseren Zerstäubungsresultat führt.

In Fig. 3 ist eine abgewandelte Ausbildung der Schmelzezerstäubung dargestellt. Die Auslauföffnung 4 des Tundish 1 wird von einem ringförmigen Düsenstein 29 begrenzt, der von einem Graphitring 30 umgeben ist, dem ein an eine Wechselspannungsquelle 32 angeschlossener Induktor 31 zugeordnet ist. Die dadurch erzielte induktive Beheizung des Tundishauslaufs 4 ermöglicht es, die auslaufende Schmelze auf der geforderten Temperatur zu halten. In die Schmelze 2 taucht nun ein koaxial zur Auslauföffnung 4 angeordnetes Wehrrohr 33 ein, welches zwischen seiner Unterkante und dem Tundishboden einen Ringspalt definiert, über welchen die Schmelze ausläuft. Wenn das Wehrrohr 33 höhenverstellbar ist, kann der auslaufende Schmelzestrom eingestellt werden. Im Inneren des Wehrrohrs 33 ist eine Lanze 34 höhenverstellbar angeordnet, die mit ihrer Lanzendüse 36 in den auslaufenden Schmelzehohlzylinder 6 reicht. Über die Lanze wird CO mit hoher Geschwindigkeit eingestoßen und zerstäubt in dem Reaktor 7 den auslaufenden Schmelzehohlzylinder 6. Über den Ringspalt zwischen dem Wehrrohr 33 und der Lanze kann C und Sauerstoff eingesaugt werden. Im Reaktor 7 kann wiederum eine Ringdüse 11 zum Einstoßen von Sauerstoff angeordnet sein.

Fig. 4 zeigt eine vergrößerte Darstellung des Abschnitts 14 des Reaktors 7 in einer abgewandelten Ausbildung. Entlang der Direktreduktionsstrecke sind Ringdüsen 37 angeordnet, über welche Sauerstoff in den Abschnitt 14 des Reaktors 7 eingedüst werden kann, wobei dies erfolgt, um einen isothermen Betriebszustand aufrecht zu erhalten, indem überschüssige Kohlenstoffpartikel mit Sauerstoff exotherm vergast werden. Jeder Ringdüse 37 ist hierbei ein Temperatursensor 38 zugeordnet, wobei die einzustoßende Sauerstoffmenge in Abhängigkeit von den Messwerten des jeweiligen Temperatursensors 38 erfolgt. Wie in der Querschnittsansicht gemäß Fig. 5 gezeigt, sind die Ringdüsen 37 so gestaltet, dass Sauerstoff tangential in den Reaktor 7 eingestoßen wird, wodurch ein zentraler Reaktions-Wirbel entsteht. Im unmittelbaren Bereich der Sauerstoffeinbringung können CO₂-Brennflecken 40 entstehen, welche örtlich begrenzt zu Temperaturen bis zu 2.200°C führen können, was eine Kalzination bzw. Thermodissoziation von Ca₃(PO₄)₂ bewirkt. Die oben beschriebene Ausbildung eines Reaktions-Wirbels minimiert dabei den Kontakt mit der inneren Feuerfestauskleidung des Reaktors 7, sodass diese nicht übermäßig angegriffen wird.

Weiters können entlang der Direktreduktionsstrecke auch feste Kohlenstoffpartikel in den Abschnitt 14 des Reaktors 7 eingebracht werden, wie dies mit den Pfeilen 39 angedeutet ist. Die Einbringung der Kohlenstoffpartikel soll die Umsetzung des bei der Reduktionsreaktion entstehenden CO₂ in CO entsprechend der Boudouard-Reaktion bewirken. Während im Bereich der Sauerstoffeinbringung oxidierende Bedingungen im Reaktor 7 herrschen, sind dazwischen, insbesondere im Bereich der Kohlenstoffeinbringung reduzierende Bedingungen gegeben.

Am Ende der Direktreduktionsstrecke kann ein Sensor 41 im Reaktor 7 angeordnet sein, welcher den CO₂-Partialdruck misst. Dieser Messwert gibt den Kohlenstoffumsatzgrad an, da bevorzugt nur geringe oder keine C-Partikel in die Kohlenstoff-Schüttung 16 des Separators 15 eingeschleppt werden sollen, um hier Verstopfungen zu vermeiden. Die Sauerstoffeinbringung über die unterste Ringdüse 37 kann hierbei in Abhängigkeit der Messwerte geregelt werden.

Fig. 6 zeigt eine Ausbildung des Vergasers 8 samt Kohlenstoffzuführung. Die Zuführung von Kohlenstoffstaub erfolgt über eine druckfeste Doppel-Pendelklappe 42, von welcher der Kohlenstoffstaub in einen Dosierbehälter 43 gelangt. Von dort erfolgt die Einbringung in den Vergaser 8 über eine Dosiereinrichtung, wie z.B. eine Zellradschleuse 44. Der Kohlenstoffstaub wird hierbei von oben über eine mittige Öffnung in den Vergaser 8 eingebracht. Die Feuerfestauskleidung des Vergasers 8 kann z.B. aus SiC bestehen.

In Fig. 7 ist ersichtlich, dass die Sauerstoffeinbringung in den Vergaser 8 über zwei diametral zueinander angeordnete tangentiale Zuführungen 45 erfolgt, wodurch die gewünschte zyklonartige Strömung im Inneren des Vergasers 8 erzeugt wird.

Fig. 8 und 9 ist die Ringdüse 11 vergrößert dargestellt. Es ist ersichtlich, dass die Ringdüse 11 eine ringförmige Düsenkammer 46 aufweist, welche eine kreisförmige Reihe von in einer Düsenplatte 51 ausgebildeten Lochdüsen 47 aufweist. Die ringförmige Düsenkammer 46 ist von einem im Querschnitt U-förmigen Kühlwasserkanal 48 umgeben, welcher einen Kühlwasserzulauf 49 und einen Kühlwasserablauf 50 umfasst. Weiters kann die Ringdüse eine Feuerfestummantelung 52 tragen.

In Fig. 10 ist der Separator 15 in einer Teilansicht dargestellt. Der Separator 15 umfasst einen Kohlenstoff-Suszeptor 16 aus grobstückigem Kohlenstoff, wie z.B. Graphit oder Hüttenkoks oder Mischungen hiervon. Die von Wechselstrom durchflossene Spule 17 umgibt das Gehäuse und geeignet den Kohlenstoff-Suszeptor 16 sowie das Separatorrohr 20 zu beheizen. Die am Separatorrohr angeordneten, jeweils schräg nach unten vorragenden Ringelemente 53 bilden zwischen sich schräg nach oben verlaufende Kanäle 19 aus und verhindern, dass Schmelzetröpfchen oder der Kohlenstoff des Suszeptors 16 in das Innere des Separatorrohrs 20 getragen werden.

## Patentansprüche

1. Verfahren zum Aufarbeiten einer Eisenoxid und Phosphoroxide enthaltenden Schmelze zur Gewinnung von elementarem Phosphor durch carbothermische Direktreduktion der Phosphoroxide, **dadurch gekennzeichnet, dass** die Schmelze zerstäubt wird, die dadurch entstandenen Schmelzetröpfchen in Kontakt mit Kohlenmonoxid als Reduktionsmittel über eine Direktreduktionsstrecke geführt werden, in der die enthaltenen Phosphoroxide zumindest teilweise in gasförmigen elementaren Phosphor reduziert werden und von der die Schmelzetröpfchen gemeinsam mit dem gasförmigen elementaren Phosphor einem Separator zugeführt werden, mittels welchem der gasförmige elementare Phosphor von den Schmelzetröpfchen abgetrennt wird, wobei bevorzugt die Schmelze mit Hilfe des Reduktionsmittels als Zerstäubermedium zerstäubt wird.

2. Verfahren nach Anspruch 1, **dadurch gekennzeichnet, dass** die Schmelze als Schmelzehohlzylinder aus einem Tundish ausgetragen wird und das Reduktionsmittel in das Innere des Schmelzehohlzylinders ausgestoßen wird, wobei das Reduktionsmittel vorzugsweise mit einer Geschwindigkeit von 500-700 m/s ausgestoßen wird.

3. Verfahren nach Anspruch 1 oder 2, **dadurch gekennzeichnet, dass** die Schmelze bei einer Schmelzetemperatur von 1.200 - 1.500°C und/oder mit einer Schmelzeviskosität von 0,1 - 2,8 Pa·sec zerstäubt wird.

4. Verfahren nach Anspruch 1, 2 oder 3, **dadurch gekennzeichnet, dass** Kohlenmonoxid gemeinsam mit festem Kohlenstoff, insbesondere staubförmigem Kohlenstoff, eingebracht wird, wobei Kohlenmonoxid bevorzugt mit einer Temperatur von 1.200 - 1.500°C eingebracht wird, wobei bevorzugt das Reduktionsmittel in einem Vergaser durch Teilverbrennung eines feinkörnigen Kohlenstoffträgers, ausgewählt aus der Gruppe bestehend aus Kokspulver, Aktivkohlepulver, Holzkohlenpulver und Anthrazitstaub zu Kohlenmonoxid und festem Kohlenstoff hergestellt wird.

5. Verfahren nach einem der Ansprüche 1 bis 4, **dadurch gekennzeichnet, dass** in die Direktreduktionsstrecke Sauerstoff oder ein sauerstoffhaltiges Gas eingedüst wird, um eine Vergasung des bevorzugt mit dem Reduktionsmittel eingebrachten festen Kohlenstoffs zu Kohlenmonoxid zu bewirken, wobei bevorzugt die Eindüsung von Sauerstoff oder eines sauerstoffhaltiges Gases an wenigstens zwei, insbesondere mehreren, in Strömungsrichtung aufeinanderfolgenden Stellen der Direktreduktionsstrecke erfolgt.

6. Verfahren nach Anspruch 4 oder 5, **dadurch gekennzeichnet, dass** fester Kohlenstoff, insbesondere staubförmiger Kohlenstoff, an wenigstens zwei, insbesondere mehreren, in Strömungsrichtung aufeinanderfolgenden Stellen in die Direktreduktionsstrecke eingebracht wird.

7. Verfahren nach einem der Ansprüche 1 bis 6, **dadurch gekennzeichnet, dass** die Schmelzetröpfchen und der gasförmige elementare Phosphor am Ende der Direktreduktionsstrecke in eine insbesondere induktiv beheizte Kohlenstoff-Schüttung geleitet werden, in der eine Tröpfchenagglomeration stattfindet und die abtropfende Schmelze gesammelt wird, wobei der gasförmige elementare Phosphor bevorzugt durch die insbesondere induktiv beheizte Kohlenstoff-Schüttung geleitet wird und über eine Mehrzahl von insbesondere schräg nach oben gerichteten Kanälen in ein in der Kohlenstoff-Schüttung angeordnetes Separatorrohr des Separators geführt wird, wobei bevorzugt das Separatorrohr aus Kohlenstoff, insbesondere Graphit besteht und induktiv beheizt wird.

8. Vorrichtung zur Durchführung eines Verfahrens nach einem der Ansprüche 1 bis 7, umfassend einen Tundish mit einem in einen Direktreduktionsreaktor führenden Auslauf und eine Ausstoßvorrichtung zum Ausstoßen von Kohlenmonoxid in den Bereich des Auslaufs zum Zerstäuben der auslaufenden Schmelze in Schmelzetröpfchen, wobei an den Direktreduktionsreaktor ein Separator anschließt, der zur Abtrennung von im Direktreduktionsreaktor gebildetem, gasförmigen, elementaren Phosphor von den Schmelzetröpfchen ausgebildet ist, wobei der Separator eine insbesondere induktiv beheizbare Kohlenstoff-Schüttung umfasst, in der eine Tröpfchenagglomeration stattfindet.

9. Vorrichtung nach Anspruch 8, **dadurch gekennzeichnet, dass** der Separator ein Separatorrohr umfasst, das in der Kohlenstoff-Schüttung angeordnet ist und das eine Mehrzahl von insbesondere schräg nach oben gerichteten Kanälen aufweist, über welche der gasförmige Phosphor von der Kohlenstoff-Schüttung in das Innere des Separatorrohrs führbar ist, wobei bevorzugt das Separatorrohr aus Kohlenstoff, insbesondere Graphit besteht und induktiv beheizbar ist.

10. Vorrichtung nach Anspruch 8 oder 9, **dadurch gekennzeichnet, dass** wenigstens eine Düse zum Einstoßen von Sauerstoff oder eines sauerstoffhaltigen Gases in die Direktreaktionskammer vorgesehen ist, wobei bevorzugt eine ringförmige Düse koaxial zur Achse des Tundishauslaufes in der Direktreduktionskammer angeordnet ist.

11. Vorrichtung nach Anspruch 10, **dadurch gekennzeichnet, dass** Düsen zum Einstoßen von Sauerstoff oder eines sauerstoffhaltigen Gases in die Direktreaktionskammer an wenigstens zwei, insbesondere mehreren, in Strömungsrichtung aufeinanderfolgenden Stellen angeordnet sind bzw. in die Direktreduktionskammer münden.

12. Vorrichtung nach einem der Ansprüche 8 bis 11, **dadurch gekennzeichnet, dass** Düsen zum Einstoßen von festem Kohlenstoff, insbesondere staubförmigem Kohlenstoff, an wenigstens zwei, insbesondere mehreren, in Strömungsrichtung aufeinanderfolgenden Stellen der Direktreduktionskammer vorgesehen sind.

13. Vorrichtung nach einem der Ansprüche 8 bis 12, **dadurch gekennzeichnet, dass** ein Vergaser vorgesehen ist, dem ein feinkörniger Kohlenstoffträger, ausgewählt aus der Gruppe bestehend aus Kokspulver, Aktivkohlepulver, Holzkohlenpulver und Anthrazitstaub sowie Sauerstoff zuführbar ist und der eine insbesondere düsenförmige Ausstoßöffnung aufweist, welche die Ausstoßvorrichtung zum Ausstoßen des im Vergaser gebildeten Kohlenmonoxids in den Bereich des Tundishauslaufs ausbildet.

14. Vorrichtung nach einem der Ansprüche 8 bis 13, **dadurch gekennzeichnet, dass** im Tundish ein insbesondere höhenverstellbares Wehrrohr angeordnet ist, dessen Unterkante einen ringspaltförmigen Auslaufquerschnitt begrenzt, wobei bevorzugt im Wehrrohr eine insbesondere höhenverstellbare Lanze zum Einstoßen von Sauerstoff oder eines sauerstoffhaltigen Gases in den Direktreduktionsreaktor angeordnet ist.

15. Vorrichtung nach Anspruch 14, **dadurch gekennzeichnet, dass** eine außen vom Wehrrohr und innen von der Lanze begrenzte Ringkammer mit dem Vergaser verbunden ist und die Ausstoßvorrichtung für Kohlenmonoxid ausbildet.

## Claims

1. Method of processing a melt containing iron oxide and phosphorus oxides for the production of elemental phosphorus by carbothermal direct reduction of the phosphorus oxides, **characterized in that** the melt is atomized, the resulting melt droplets in contact with carbon monoxide as a reducing agent are conducted over a direct reduction section in which the phosphorus oxides contained are at least partially reduced to gaseous elemental phosphorus and from which the melt droplets are fed together with the gaseous elemental phosphorus to a separator, by means of which the gaseous elemental phosphorus is separated from the melt droplets, the melt preferably being atomized with the aid of the reducing agent as the atomizing medium.

2. Method according to claim 1, **characterized in that** the melt is discharged as a hollow melt cylinder from a tundish and the reducing agent is ejected into the interior of the hollow melt cylinder, the reducing agent preferably being ejected at a speed of 500-700 m/s.

3. Method according to claim 1 or 2, **characterized in that** the melt is atomized at a melt temperature of 1,200-1,500°C and/or with a melt viscosity of 0.1-2.8 Pa·sec.

4. Method according to claim 1, 2 or 3, **characterized in that** carbon monoxide is introduced together with solid carbon, in particular powdered carbon, carbon monoxide preferably being introduced at a temperature of 1,200-1,500°C, the reducing agent preferably being produced in a gasifier by partial combustion of a fine-grain carbon carrier selected from the group consisting of coke powder, activated carbon powder, charcoal powder and anthracite dust to form carbon monoxide and solid carbon.

5. Method according to any one of claims 1 to 4, **characterized in that** oxygen or an oxygen-containing gas is injected into the direct reduction section in order to gasify the solid carbon preferably introduced with the reducing agent to form carbon monoxide, with the injection of oxygen or an oxygen-containing gas preferably taking place at at least two, in particular several, successive points in the flow direction of the direct reduction section.

6. Method according to claim 4 or 5, **characterized in that** solid carbon, in particular powdered carbon, is introduced into the direct reduction section at at least two, in particular several, successive points in the direction of flow.

7. Method according to any one of claims 1 to 6, **characterized in that** the melt droplets and the gaseous elemental phosphorus are passed at the end of the direct reduction section into an in particular inductively heated carbon bed, in which droplet agglomeration takes place and the dripping melt is collected, wherein the gaseous elemental phosphorus is preferably passed through the in particular inductively heated carbon bed and is guided via a plurality of in particular inclined, upwardly directed channels into a separator tube of the separator arranged in the carbon bed, the separator tube preferably being made of carbon, in particular graphite, and being inductively heated.

8. Device for carrying out a method according to any one of claims 1 to 7, comprising a tundish with an outlet leading into a direct reduction reactor and an ejection device for ejecting carbon monoxide into the area of the outlet for atomizing the outflowing melt into melt droplets, a separator being connected to the direct reduction reactor, which is designed to separate gaseous, elemental phosphorus formed in the direct reduction reactor from the melt droplets, the separator comprising an in particular inductively heatable carbon bed in which droplet agglomeration takes place.

9. Device according to claim 8, **characterized in that** the separator comprises a separator tube which is arranged in the carbon bed and which has a plurality of channels, in particular directed obliquely upward, via which the gaseous phosphorus from the carbon bed can be guided into the interior of the separator tube, the separator tube preferably consisting of carbon, in particular graphite, and being inductively heatable.

10. Device according to claim 8 or 9, **characterized in that** at least one nozzle is provided for injecting oxygen or an oxygen-containing gas into the direct reduction chamber, an annular nozzle preferably being arranged coaxially to the axis of the tundish outlet in the direct reduction chamber.

11. Device according to claim 10, **characterized in that** nozzles for injecting oxygen or an oxygen-containing gas into the direct reaction chamber are arranged, or open into the direct reduction chamber, at at least two, in particular several, successive points in the direction of flow.

12. Device according to any one of claims 8 to 11, **characterized in that** nozzles for injecting solid carbon, in particular powdered carbon, are provided at at least two, in particular several, successive points of the direct reduction chamber in the direction of flow.

13. Device according to any one of claims 8 to 12, **characterized in that** a gasifier is provided, to which a fine-grain carbon carrier, selected from the group consisting of coke powder, activated carbon powder, charcoal powder and anthracite dust as well as oxygen can be fed and which has a particularly nozzle-shaped discharge opening which forms the ejection device for ejecting the carbon monoxide formed in the gasifier in the area of the tundish outlet.

14. Device according to any one of claims 8 to 13, **characterized in that** a weir tube is arranged in the tundish in an in paraticular height-adjustable manner, the lower edge of which delimits an annular gap-shaped outlet cross-section, with a particularly height-adjustable lance for pushing oxygen or an oxygen-containing gas into the direct reduction reactor preferably being arranged in the weir tube.

15. Device according to claim 14, **characterized in that** an annular chamber bounded on the outside by the weir tube and on the inside by the lance is connected to the gasifier and forms the ejection device for carbon monoxide.

## Revendications

1. Procédé de traitement d'une masse fondue contenant de l'oxyde de fer et de l'oxyde de phosphore pour obtenir du phosphore élémentaire par réduction carbothermique directe des oxydes de phosphore, **caractérisé en ce que** la masse fondue est vaporisée, et les gouttelettes de masse fondue ainsi produites sont amenées, en contact avec du monoxyde de carbone en tant qu'agent réducteur, sur un trajet de réduction directe, où les oxydes de phosphore présents sont au moins partiellement réduits en phosphore élémentaire gazeux, et à partir duquel les gouttelettes de masse fondue sont acheminées conjointement avec le phosphore élémentaire gazeux jusqu'à un séparateur, au moyen duquel le phosphore élémentaire gazeux est séparé des gouttelettes de masse fondue, dans lequel, de préférence, la masse fondue est vaporisée à l'aide de l'agent réducteur en tant que milieu de vaporisation.

2. Procédé selon la revendication 1, **caractérisé en ce que** la masse fondue est déchargée d'un entonnoir sous forme de cylindre de masse fondue creux, et l'agent réducteur est expulsé à l'intérieur du cylindre de masse fondue creux, dans lequel l'agent réducteur est de préférence expulsé à une vitesse de 500 - 700 m/s.

3. Procédé selon la revendication 1 ou 2, **caractérisé en ce que** la masse fondue est vaporisée à une température de fusion de 1.200 - 1.500°C et/ou avec une viscosité à l'état fondu de 0,1 - 2,8 Pa·sec.

4. Procédé selon la revendication 1, 2 ou 3, **caractérisé en ce que** du monoxyde de carbone est introduit conjointement avec du carbone solide, en particulier du carbone en poudre, dans lequel le monoxyde de carbone est introduit de préférence avec une température de 1.200 - 1.500°C, dans lequel l'agent réducteur est de préférence produit dans un gazéifieur par combustion partielle d'un support de carbone à grains fins, choisi dans le groupe constitué de la poudre de coke, de la poudre de charbon actif, de la poudre de charbon de bois et de la poussière d'anthracite, en du monoxyde de carbone et du carbone solide.

5. Procédé selon l'une quelconque des revendications 1 à 4, **caractérisé en ce que** de l'oxygène ou un gaz contenant de l'oxygène est injecté dans le trajet de réduction directe pour provoquer une gazéification du carbone solide, qui est introduit de préférence avec l'agent réducteur, en du monoxyde de carbone, dans lequel l'injection d'oxygène ou d'un gaz contenant de l'oxygène est réalisée de préférence à au moins deux, en particulier plusieurs points du trajet de réduction directe se succédant dans le sens de l'écoulement.

6. Procédé selon la revendication 4 ou 5, **caractérisé en ce que** du carbone solide, en particulier du carbone en poudre, est introduit dans le trajet de réduction directe à au moins deux, en particulier plusieurs points se succédant dans le sens de l'écoulement.

7. Procédé selon l'une quelconque des revendications 1 à 6, **caractérisé en ce que** les gouttelettes de masse fondue et le phosphore élémentaire gazeux sont acheminés à la fin du trajet de réduction directe dans un lit de charbon chauffé, en particulier par induction, dans lequel une agglomération des gouttelettes est effectuée et la masse fondue qui s'égoutte est collectée, dans lequel le phosphore élémentaire gazeux est de préférence acheminé à travers le lit de charbon chauffé, en particulier par induction, et est guidé, à travers une pluralité de canaux dirigés vers le haut, en particulier obliquement, dans un tube séparateur du séparateur disposé dans le lit de charbon, dans lequel le tube séparateur est de préférence fait de carbone, en particulier de graphite, et est chauffé par induction.

8. Dispositif pour la mise en œuvre d'un procédé selon l'une quelconque des revendications 1 à 7, comprenant un entonnoir avec une sortie débouchant dans un réacteur de réduction directe et un éjecteur pour éjecter du monoxyde de carbone dans la proximité de la sortie afin de vaporiser la masse fondue sortante en des gouttelettes de masse fondue, dans lequel un séparateur est connecté au réacteur de réduction directe, qui est conçu pour séparer le phosphore élémentaire gazeux formé dans le réacteur de réduction directe des gouttelettes de masse fondue, dans lequel le séparateur comprend un lit de carbone pouvant être chauffé, en particulier par induction, dans lequel une agglomération des gouttelettes est effectuée.

9. Dispositif selon la revendication 8, **caractérisé en ce que** le séparateur comprend un tube séparateur, qui est disposé dans le lit de carbone et qui comporte une pluralité de canaux dirigés vers le haut, en particulier obliquement, à travers lesquels le phosphore gazeux peut être acheminé depuis le lit de carbone jusqu'à l'intérieur du tube séparateur, dans lequel le tube séparateur est de préférence fait de carbone, en particulier de graphite, et peut être chauffé par induction.

10. Dispositif selon la revendication 8 ou 9, **caractérisé en ce que** au moins une buse d'injection d'oxygène ou d'un gaz contenant de l'oxygène est prévue dans la chambre de réaction directe, dans lequel, de préférence, une buse annulaire coaxiale à l'axe de la sortie de l'entonnoir est disposée dans la chambre de réduction directe.

11. Dispositif selon la revendication 10, **caractérisé en ce que** des buses d'injection d'oxygène ou d'un gaz contenant de l'oxygène dans la chambre de réaction directe sont disposées à au moins deux, en particulier plusieurs points se succédant dans le sens de l'écoulement, ou débouchent dans la chambre de réduction directe.

12. Dispositif selon l'une quelconque des revendications 8 à 11, **caractérisé en ce que** des buses d'injection de carbone solide, en particulier du carbone en poudre, sont prévues à au moins deux, en particulier plusieurs points de la chambre de réduction directe se succédant dans le sens de l'écoulement.

13. Dispositif selon l'une quelconque des revendications 8 à 12, **caractérisé en ce qu'**il est prévu un gazéifieur auquel peut être alimenté un support de carbone à grains fins, choisi dans le groupe constitué de la poudre de coke, de la poudre de charbon actif, de la poudre de charbon de bois et de la poussière d'anthracite, ainsi que de l'oxygène, et qui comporte un orifice de décharge, en particulier en forme de buse, qui forme l'éjecteur pour éjecter les monoxydes de carbone formés dans le gazéifieur dans la proximité de l'entonnoir.

14. Dispositif selon l'une quelconque des revendications 8 à 13, **caractérisé en ce qu'**un déversoir, en particulier réglable en hauteur, est disposé dans l'entonnoir, dont le bord inférieur délimite une section de sortie en forme de fente annulaire, dans lequel, de préférence, une lance, en particulier réglable en hauteur, est disposée dans le déversoir pour injecter de l'oxygène ou un gaz contenant de l'oxygène dans le réacteur de réduction directe.

15. Dispositif selon la revendication 14, **caractérisé en ce qu'**une chambre annulaire délimitée extérieurement par le déversoir et intérieurement par la lance est connectée au gazéifieur et forme l'éjecteur de monoxyde de carbone.
